# EUROPEAN PATENT APPLICATION

(11) **EP 4 535 881 A1**
(43) Date of publication of application: **09.04.2025**
(21) Application number: 23858829.7
(22) Date of filing: 20.06.2023
(51) Int. Cl.: H04W 52/02, H04W 4/20

(54) **INFORMATION TRANSMISSION METHOD AND APPARATUS**

(30) Priority: 31.08.2022 CN 202211057899
(71) Applicant: ZTE Corporation, Shenzhen, Guangdong 518057 (CN)
(72) Inventor: LIU, Kun, Shenzhen, Guangdong 518057 (CN); YANG, Weiwei, Shenzhen, Guangdong 518057 (CN); DAI, Bo, Shenzhen, Guangdong 518057 (CN); CHEN, Mengzhu, Shenzhen, Guangdong 518057 (CN); HU, Youjun, Shenzhen, Guangdong 518057 (CN)
(74) Representative: Casalonga
(86) International application number: PCT/CN2023/101383
(87) International publication number: WO 2024/045790

(57) **Abstract**

Provided in the present disclosure is an information transmission method, comprising: a second node sending first information, and correspondingly, a first node receiving the first information from the second node, wherein the first information comprises a first part and/or a second part, the first part comprising a first signal and/or first control information, and the second part comprising a second signal and/or second control information.

## Description

The present disclosure claims a priority to Chinese Patent Application No. 202211057899.1, filed on August 31, 2022, which is hereby incorporated by reference in its entirety.

### TECHNICAL FIELD

The present disclosure relates to the field of communication technology, and in particular, to an information transmission method and apparatus.

### BACKGROUND

For the fifth generation (5th generation, 5G) communication system, in addition to delay, reliability, and availability, the energy efficiency of a terminal device is also crucial.

### SUMMARY

In a first aspect, there is provided a signal transmission method, where the method includes: sending, by a first node, first information, where the first information includes a first portion and/or a second portion, the first portion includes a first signal and/or first control information, and the second portion includes a second signal and/or second control information.

In a second aspect, there is provided an information transmission method, where the method includes: receiving, by a first node, first information from a second node; where the first information includes a first portion and/or a second portion, the first portion includes a first signal and/or first control information, and the second portion includes a second signal and/or second control information.

In a third aspect, there is provided an information transmission apparatus, where the apparatus includes: a sending unit, configured to send first information, where the first information includes a first portion and/or a second portion, the first portion includes a first signal and/or first control information, and the second portion includes a second signal and/or second control information.

In a fourth aspect, there is provided an information transmission apparatus, where the apparatus includes: a receiving unit, configured to receive first information from a second node, where the first information includes a first portion and/or a second portion, the first portion includes a first signal and/or first control information, and the second portion includes a second signal and/or second control information.

In a fifth aspect, there is provided an information transmission apparatus. The apparatus may implement functions performed in the various above-mentioned aspects or various possible designs, and the function may be implemented through hardware, for example: in some embodiments, the information transmission apparatus may include: a processor and a communication interface, where the processor may be configured to support the information transmission apparatus to implement the functions involved in any one of the embodiments in the first aspect or the second aspect described above, for example: the processor sends the first information through the communication interface.

In some other embodiments, the information transmission apparatus may further include a memory, and the memory is configured to store computer execution instructions and data necessary for the information transmission apparatus. When the information transmission apparatus is running, the processor performs the computer execution instructions stored in the memory to enable the information transmission apparatus to perform the information transmission method described in any possible design of the first aspect or the second aspect.

In the sixth aspect, there is provided a computer-readable storage medium. The computer-readable storage medium may be a readable non-volatile storage medium. The computer-readable storage medium stores computer instructions or a program. When the computer instructions or the program is executed on a computer, so that the computer may perform the information transmission method described in any possible design of the first aspect or the above-mentioned aspects.

In a seventh aspect, there is provided a computer program product including instructions. When the computer program product is executed on a computer, the computer is enabled to perform the information transmission method described in any one of the embodiments of the first aspect or the above-mentioned aspects.

### BRIEF DESCRIPTION OF THE DRAWINGS

FIG. 1 is a structural schematic diagram of a communication system according to some embodiments.
FIG. 2 is a structural schematic diagram of an information transmission apparatus according to some embodiments.
FIG. 3 is a schematic diagram of an information transmission method according to some embodiments.
FIG. 4 is a structural schematic diagram of first information according to some embodiments.
FIG. 5 is a structural schematic diagram of another first information according to some embodiments.
FIG. 6 is a structural schematic diagram of yet another first information according to some embodiments.
FIG. 7 is a structural schematic diagram of yet another first information according to some embodiments.
FIG. 8 is a structural schematic diagram of an information transmission apparatus according to some embodiments.
FIG. 9 is a structural schematic diagram of an information transmission apparatus according to some embodiments.

### DETAILED DESCRIPTION

In order to enable those skilled in the art to better understand the technical solutions in the embodiments of the present disclosure, the technical solutions in the embodiments of the present disclosure will be described clearly and completely in conjunction with the accompanying drawings.

In the description of the present disclosure, unless otherwise specified, a character "/" means an "or" relationship, for example, "A/B" may represent A or B. The term "and/or" includes any and all combinations of one or more related listed items. For example, A and/or B includes only A, only B, only C, A and B, A and C, B and C, or A, B and C.

In the description of the present disclosure, unless otherwise specified, "at least one" refers to one or more, "a plurality of" refers to two or more than two.

Hereinafter, the terms "first", "second", etc., do not limit a quantity and an execution order, and the terms "first", "second", etc., do not necessarily limit that corresponding objects must be different. "At least one of the following items" or similar expressions thereof refers to any combination of these items, which includes a single item or any combination of multiple items. For example, at least one of a, b, or c may represent: a, b, c, a and b, a and c, b and c, a, b and c, where a number of a, b, or c may be single or multiple.

It should be noted that in the present disclosure, wordings, such as "exemplarily" or "for example" and variations thereof are used to indicate examples, illustrations, or clarifications. Any embodiment or design solution described in the present disclosure with "exemplarily" or "for example" should not be illustrated as being more preferred or advantageous over other embodiments or design solutions. Specifically, the usage of wordings such as "exemplarily" or "for example" is intended to present relevant concepts in a concrete way.

In the embodiments of the present disclosure, "indication" and variations thereof may include direct indication and indirect indication. For example, taking the following first control information as an example, the first control information may directly carry information A itself or an index of the information A to achieve a purpose of directly indicating information A. Alternatively, the first control information may also carry information B associated with information A, thereby achieving the purpose of indirectly indicating information A while indicating information B.

The terms "including," and "having," and any variations thereof, are intended to cover non-exclusive inclusions. For example, a process, a method, a system, a product or a device that includes a series of steps or units is not limited to the listed steps or units, but optionally further includes other unlisted steps or units, or optionally further includes other steps or units inherent to the process, the method, the product or the device.

Currently, a 5G device may need to be charged weekly or daily according to personal usage time. Generally, the 5G device consumes tens of milliwatts of power in an idle/inactive state and consumes hundreds of milliwatts of power in a connected state. Therefore, the energy efficiency and the user experience can be improved by extending battery life.

In order to extend the battery life, the 3rd generation partnership project (3rd generation partnership project, 3GPP) has considered introducing a low power wake up (low power wake up, LP-WUS) mechanism in Rel-18, i.e., a terminal device uses a separate receiver to receive or detect a wake-up signal. The terminal device that receives or detects the wake-up signal wakes up a main radio device (Main Radio) or turns on the main radio device, or switches the main radio device into a working state, so as to perform data transmission and data reception. When the terminal device does not receive or detect a low power wake-up signal, the main radio device is in a deep sleep state or in a closed state. In this way, the power consumption of the terminal device can be further reduced. However, a specific structure of an LP-WUS signal has not been determined yet.

A wake-up signal, which may also be referred to as a low power wake-up signal, wake-up information, etc., may be used to trigger a terminal device to receive data and/or transmit data.

In some embodiments, the terminal device is provided with a wake-up circuit (also referred to as a low-power small circuit, a wake-up module, or a wake-up unit) and a main receiving circuit (also referred to as a main receiver, a main receiving module, or a main receiving unit). The wake-up circuit is mainly configured to support the terminal device in an idle state or in an inactive state to receive the wake-up signal, and the main receiving circuit is mainly configured to receive data and/or transmit data.

In the embodiments of the present disclosure, after the terminal device monitors the wake-up signal for waking the terminal device itself up, the wake-up circuit is turned off and the main receiving circuit is turned on. If the terminal device does not detect the wake-up signal, the wake-up circuit remains turned on, and the main receiving circuit is not turned on (at this time, a state of the terminal device may be referred to as a wake-up state or an LP-WUS state or an LP-WUS detecting state, etc.). In this way, the power consumption of the terminal device can be reduced.

Technical solutions provided in the embodiments of the present disclosure may be applied to various communication systems, for example, a new radio (New Radio, NR) communication system using 5G communication technology, a future evolution system, or a multi-communication convergence system.

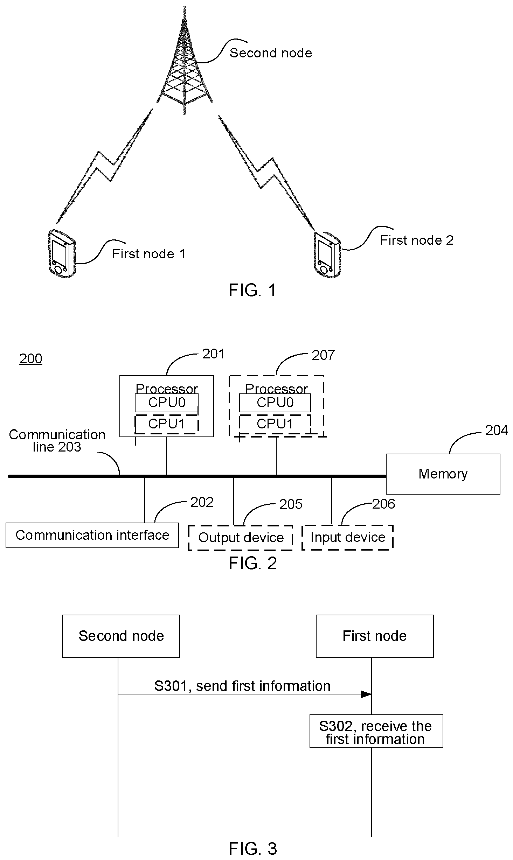

Exemplarily, FIG. 1 is a structural schematic diagram of a communication system according to some embodiments. As shown in FIG. 1, the communication system includes a second node and multiple first nodes (such as first node 1 and first node 2 in FIG. 1), and the first node and one or more second nodes can be in a communication connection.

The second node may be a network device, or a device having a function of a network device. The second node may be configured to implement functions, such as resource scheduling, wireless resource management, and wireless access control for a terminal device. Exemplarily, the second node may be any node of a small base station, a wireless access point, a transmission receive point (transmission receive point, TRP), a transmission point (transmission point, TP), or other access nodes.

A first node may be a terminal device, or a device having a function of a terminal device. The terminal device may also be referred to as a terminal, user equipment (user equipment, UE), a mobile station, or a mobile terminal. The terminal device may be a mobile phone, a tablet computer, a computer with wireless transceiver functions, a virtual reality terminal device, an augmented reality terminal device, a wireless terminal in industrial control, a wireless terminal in self driving, a wireless terminal in remote surgery, a wireless terminal in transportation safety, a wireless terminal in smart city, or a wireless terminal in smart home, etc. A device form adopted by the terminal device is not limited in the embodiments of the present disclosure.

It should be noted that FIG. 1 is merely an exemplary framework diagram, and a number of nodes and names of the various devices included in FIG. 1 are not limited. In addition to functional nodes shown in FIG. 1, the communication system may further include other nodes, such as a core network device.

The application scenarios are not limited in the embodiments of the present disclosure. The system architecture and service scenarios described in the embodiments of the present disclosure are intended to illustrate the technical solutions of the embodiments of the present disclosure more clearly, and do not constitute a limitation on the technical solutions provided in the embodiments of the present disclosure. A person of ordinary skill in the art can appreciate that with the evolution of network architecture and the emergence of new service scenarios, the technical solutions provided in the embodiments of the present disclosure are also applicable to similar technical problems.

In some embodiments, the devices in FIG. 1 may all adopt a composition structure shown in FIG. 2, or include components shown in FIG. 2. FIG. 2 is a schematic diagram of the composition of an information transmission apparatus according to some embodiments. The information transmission apparatus 200 may be a second node, or a chip, or a system on chip in the second node. Alternatively, the information transmission apparatus 200 may be a first node, or a chip, or a system on chip in the first node. As shown in FIG. 2, the information transmission apparatus 200 includes a processor 201, a communication interface 202, and a communication line 203.

In some embodiments, the information transmission apparatus 200 may further include a memory 204. The processor 201, the memory 204 and the communication interface 202 may be connected with each other through the communication line 203.

The processor 201 is configured to perform instructions stored in the memory 204, to implement an antenna parameter determination method provided in the embodiments of the present disclosure. The processor 201 may be a CPU, a general processor, a network processor (network processor, NP), a digital signal processor (digital signal processing, DSP), a microprocessor, a microcontroller, a programmable logic device (programmable logic device, PLD), or any combination thereof. The processor 201 may also be other apparatuses with processing functions, such as a circuit, an assembly or a software module, which is not limited in the present disclosure.

In some embodiments, the processor 201 may include one or more CPUs, such as CPU0 and CPU1 in FIG. 2.

In some embodiments, the information transmission apparatus 200 includes a plurality of processors, for example, in addition to the processor 201 shown in FIG. 2, the information transmission apparatus 200 may further include a processor 207.

The communication interface 202 is configured to connect to other devices or other communication networks for communication. The other communication networks may be Ethernet, radio access network (radio access network, RAN), wireless local area networks (wireless local area networks, WLAN), etc. The communication interface 202 may be a module, a circuit, a communication interface or any other apparatus capable of implementing communication.

The communication line 203 is configured to transfer information between the components included in the information transmission apparatus 200.

The memory 204 is configured to store instructions, program codes, or some data, etc. Herein, the instructions may be a computer program.

In some embodiments, the memory 204 may be a read-only memory (read-only memory, ROM) or other types of static storage devices that may store static information and/or instructions, may also be a random access memory (random access memory, RAM) or other types of dynamic storage devices that may store information and/or instructions, or may further be an electrically erasable programmable read-only memory (electrically erasable programmable read-only memory, EEPROM), a compact disc read-only memory (compact disc read-only memory, CD-ROM) or other optical disc storages, optical disc storage (including a compact disc, a laser disc, an optical disc, a digital versatile disc, a Blu-ray disc, etc.), a magnetic disk storage medium or other magnetic storage devices, which is not limited in the present disclosure.

It should be noted that the memory 204 may exist independently from the processor 201, or may be integrated with the processor 201. The memory 204 may be located inside the information transmission apparatus 200 or may be located outside the information transmission apparatus 200, which is not limited in the present disclosure.

In some embodiments, the information transmission apparatus 200 may further include an output device 205 and an input device 206. Exemplarily, the input device 206 is a device such as a keyboard, a mouse, a microphone or a joystick, and the output device 205 is a device such as a display screen and a speaker.

It should be noted that the information transmission apparatus 200 may be a desktop computer, a portable computer, a network server, a mobile phone, a tablet computer, a wireless terminal, an embedded device, a chip system, or a device with a similar structure as shown in FIG. 2. In addition, the composition structure shown in FIG. 2 does not constitute a limitation on the various devices in FIGs. 1 and 2. In addition to the components shown in FIG. 2, the various devices in FIGs. 1 and 2 may include more or fewer components than the components shown in FIGs. 1 and 2, or certain combined components, or different component arrangements.

In the embodiments of the present disclosure, a chip system may be composed of chips, or may include chips and other discrete assemblies.

Actions, terms, etc., involved in the various embodiments of the present disclosure may refer to each other, which are not limited in the present disclosure. Message names or parameter names in the messages interacted between the various devices in the embodiments of the present disclosure are merely examples, and other names may be adopted in specific implementations, which are not limited thereto.

A transmission method for a wake-up signal provided in the embodiments of the present disclosure is described as follows in conjunction with the communication system shown in FIG. 1. The actions involved in the various embodiments of the present disclosure are merely examples, and other names may be adopted in specific implementations. For example, "included in" or variations thereof in the embodiments of the present disclosure may be replaced by "carried on" or "carried in" or variations thereof, etc.

FIG. 3 is a signal transmission method according to some embodiments. As shown in FIG. 3, the method may include S301 to S302.

In S301, a second node sends first information.

The second node may be the second node in FIG. 1, or an assembly corresponding to the second node in FIG. 1, such as a chip or a system on chip.

In the present disclosure, the first information may also be referred to as a wake-up signal or an LP-WUS signal. The first information may include a first portion and/or a second portion. The first portion may include a first signal and/or first control information, and the second portion may include a second signal and/or second control information.

It should be noted that, when the first information includes the first portion and the second portion, the second node may send at least one of the first portion or the second portion, respectively. That is, the first portion and the second portion are independent from each other. For example, the second node may send the first portion first, and then send the second portion. Alternatively, the second node may send the second portion first, and then send the first portion. Alternatively, the second node may send the first portion and the second portion synchronously.

The first signal, the second signal, the first control information and the second control information are described below respectively.

A, the first signal, which may also be referred to as a long low power wake-up signal (Long LP-WUS) or a long wake-up signal, etc., which is not limited in the present disclosure.

The first signal may be used for at least one of: the first node to perform synchronization, or channel measurement; acting as a discovery signal; or indicating system information change. When the first signal is acted as a discovery signal, the first signal is used to discover at least one of: the first control information, the second portion, the second signal and the second control information. The channel measurement may include reference signal receiving power (reference signal receiving power, RSRP) measurement and/or reference signal received quality (reference signal received quality, RSRQ) measurement.

B, the second signal, which may also be referred to as a short low power wake-up signal (Short LP-WUS) or a short wake-up signal, etc., which is not limited in the present disclosure.

The second signal may be used to trigger the first node to exit a dormant state or exit an LP-WUS detecting state, or to trigger the first node to exit the LP-WUS detecting state, and perform measurement by detecting a synchronization signal block (SSB), and/or to indicate RRM measurement.

C, the first control information may be used to indicate at least one of C1 to C11.

C1, position information of the first signal.

For example, the first control information may include the position information of the first signal, or include identifier information for indicating the position information of the first signal.

The position information of the first signal may include starting position information of the first signal and time domain position information where the first signal is located. The starting position information of the first signal may include starting symbol indication information of the first signal and/or starting slot indication information of the first signal.

C2, the first node falling back to a paging process.

For example, the first control information may include fallback indication information, where the fallback indication information may be used to indicate the terminal device to fall back to a paging process, for example, falling back a legacy paging process.

C3, system information change.

For example, the first control information may include system information change indication information.

In some embodiments, when the first node receives the first control information, and the first control information is used to indicate system information change, the first node may exit the LP-WUS state and receive system information block (system information block, SIB) information.

C4, radio resource management (radio resource management, RRM) measurement.

For example, the first control information may include RRM measurement indication information, or information used to indicate RRM measurement. The information used to indicate the RRM measurement may include, for example, configuration information of the RRM measurement.

In some embodiments, the first node receives the first control information, where the first control information is used to indicate RRM measurement, or includes the information used to indicate RRM measurement. The first node may exit the LP-WUS state and perform RRM measurement by detecting an SSB.

C5, whether the second portion includes the second control information.

For example, the first control information may include indication information used to indicate whether the second portion includes the second control information. The indication information may be implemented by using one or more bits. For example, taking the indication information being implemented with a bit as an example, when the bit is "0", it indicates that the second portion does not include the second control information; and when the bit is "1", it indicates that the second portion includes the second control information.

C6, configuration information of the second control information.

The configuration information of the second control information may include an interval length between the second control information and the second signal, and/or an encoding method adopted for the second control information.

For example, the first control information may include configuration information of the second control information, or may include information used to indicate the configuration information of the second control information. In a case where the first control information includes the information used to indicate the configuration information of the second control information, the first node may acquire the configuration information of the second control information according to the information used to indicate the configuration information of the second control information. For example, the first node may acquire the configuration information of the second control information from the second node, or the first node may be pre-configured with the configuration information of the second control information.

C7, configuration change information of the first information.

The configuration change information of the first information may include at least one of: configuration change information of the first portion; configuration change information of the second portion; indication information whether to send the first signal and/or the second signal within a time window; or indication information whether to send the first signal and/or the second signal in one or more slots in a time window.

In some embodiments, in a case where a downlink resource configured for the first information is occupied, the second node may indicate not to send the first signal and/or the second signal within a time window or one or more slots of a time window through the first control information. For example, the configuration change information of the first information may include time window information (such as specific time information or identifier information corresponding to the time window) and information used to indicate not to send the first portion and/or the second portion (which may be a number or a character or a combination of the number and the character). **In** this way, the first node may not detect the first information on the downlink resource, thereby reducing the power consumption of the first node in detecting the first information.

C8, a starting resource carrying the first control information.

For example, the first control information may include starting resource indication information of the first control information, where the starting resource indication information may be identifier information (such as a numbering, a sequence number, etc.) of a starting resource of the first control information.

C9, a termination resource carrying the first control information.

For example, the first control information may include termination resource indication information of the first control information, where the termination resource indication information may be identifier information (such as a numbering, a sequence number, etc.) of a termination resource of the first control information.

C10, a starting information identifier of the first control information. For example, detecting the starting information identifier represents that a starting position of the first control information is detected.

C11, an ending information identifier of the first control information. For example, detecting the ending information identifier represents that an ending position of the first control information is detected.

In some embodiments, in a case where a resource size carrying the first control information is not fixed, based on the starting resource (or the starting information identifier) and the ending resource (or the ending information identifier) of the first control information in C8-C11, the first node can accurately determine the starting position and the ending position of the first control information. Furthermore, the terminal device can accurately detect the second control information.

Based on the various information in C1-C11, the second node can carry multiple different information by using one piece of first control information to reduce signaling overhead.

D, the second control information may be used to indicate at least one of D1 to D8:

D1, falling back to a paging process. Exemplarily, reference may be made to the description of 1-2 in the first control information, which will not be repeated in the present disclosure.

D2, system information change. Exemplarily, reference may be made to the description of 1-3 in the first control information, which will not be repeated in the present disclosure.

D3, identifier information of the first node.

In some embodiments, in a case where the second signal is configured for one or more first nodes, the second control information is used to indicate identifier information (such as a device identifier, a media access control address (media access control address, MAC), etc.) of the one or more first nodes.

D4, configuration change information of the first information. Exemplarily, reference may be made to the description of C7 in the first control information, which will not be repeated in the present disclosure.

D5, indication information of a starting resource for carrying the second control information.

D6, indication information of an ending resource for carrying the second control information.

D7, starting information identifier of the second control information.

D8, ending information identifier of the second control information.

D5-D8 may refer to the description of C8-C11 in the above-mentioned first control information, respectively, which will not be repeated in the present disclosure.

It should be noted that the second control information may be configured for one first node or one first node group. One first node group may include a plurality of first nodes.

In some embodiments, in a case where a resource size carrying the second control information is not fixed, based on the starting resource (or the starting information identifier) and the ending resource (or the ending information identifier) of the second control information in D5-D8, the first node can accurately determine the starting position and the ending position of the second control information. Furthermore, the first node can accurately detect the first control information.

In some embodiments, the second node may send the first information to the first node after the first information is generated. For example, the first information may be actively generated by the second node (for example, the first information is generated when the second node needs to send data to the first node), or generated when the second node responds to receiving indication information from other devices (such as a core network), or when the second node receives indication information of data that needs to be sent to the first node.

In some embodiments, a time domain resource occupied by the first information may include at least one time domain unit. Exemplarily, a time domain unit may be a symbol. A frequency domain resource occupied by the first information may include at least one frequency domain unit. Exemplarily, a frequency domain unit may be a subcarrier.

For example, when the first information includes the first portion and the second portion, in time domain, the first portion may occupy at least one symbol, and the second portion may occupy at least one symbol, and in frequency domain, the first portion may occupy at least one subcarrier, and the second portion may occupy at least one subcarrier.

In S302, the first node receives the first information from the second node.

The first node receiving the first information from the second node may also be described as the first node monitoring the first information sent from the second node, or the first node detecting the first information sent from the second node.

In the present disclosure, based on the technical solution in FIG. 3, a format of the first information is defined. For example, the first information may include a first portion, or a second portion, or both the first portion and the second portion. In this way, the second node may flexibly construct the first information according to the format of the first information. In addition, each portion may include a signal and/or control information. For example, the first information includes the first portion and the second portion, and each portion includes a signal and control information. That is, multiple signals and multiple pieces of control information are carried through one piece of information, thereby satisfying the diversification of the requirements.

In some embodiments, in S302, the method that the first node receives the first information from the second node may include that the first node receives the first information from the second node according to configuration information of the first information.

The configuration information of the first information may be pre-configured by the first node, or may be acquired by the first node from other devices, for example, acquired from the second node by the first node. The configuration information of the first information may include configuration information of the first information in frequency domain and/or configuration information of the first information in time domain.

The configuration information of the first information in frequency domain and the configuration information of the first information in time domain are described below.

E, configuration information of the first information in frequency domain.

In some embodiments, at least one of the following parameters is configured independently for the first signal and the second signal:
a subcarrier spacing, a bandwidth of an occupied frequency domain resource, or a position of the occupied frequency domain resource.

Exemplarily, in a case where a frequency domain unit of the frequency domain resource takes a subcarrier as a granularity, the bandwidth of the occupied frequency domain resource may be a number of occupied subcarriers, and a position of the occupied frequency domain resource may be the position(s) of the occupied subcarrier(s).

In some embodiments, the first signal and the second signal may satisfy at least one of the following relationships in frequency domain:

E1, a subcarrier spacing configured for the first signal being the same as a subcarrier spacing configured for the second signal.

E2, a bandwidth of a frequency domain resource occupied by the first signal being the same as a bandwidth of a frequency domain resource occupied by the second signal.

E3, a position of the frequency domain resource occupied by the first signal being the same as a position of the frequency domain resource occupied by the second signal.

In some embodiments, in a case where the first signal is used for the first node to perform measurement, the position of the first signal on the time domain resource is related to a position of a time domain resource occupied by an SSB.

The SSB can be configured through the synchronization signal/physical broadcast channel block measurement time configuration (SS/PBCH block measurement time configuration, SMTC).

Exemplarily, the position of the first signal on the time domain resource being related to the position of the SSB on the time domain resource may include: the position of the time domain resource occupied by the first signal being the same as the position of the time domain resource occupied by the SSB; or there being an offset value between the position of the time domain resource occupied by the first signal and the position of the time domain resource occupied by the SSB, where the offset value may be provided according to a requirement; or a starting position of the time domain resource occupied by the first signal being the same as a starting position of the time domain resource occupied by the SSB. In this way, the first node can accurately determine the position of the first signal on the time domain resource according to the position of the SSB on the time domain resource.

F, configuration information of the first information in time domain.

In some embodiments, at least one of the following parameters is configured independently for the first signal and the second signal: a size of an occupied time domain resource, or a position of the occupied time domain resource.

It should be noted that a number of time domain units occupied by the first signal is greater than or equal to a number of time domain units occupied by the second signal. For example, the number of time domain units occupied by the first signal is N times of the number of time domain units occupied by the second signal, where N is a positive integer. A time domain unit may be a symbol or a unit classified according to other granularities. In this way, the second node can accurately determine when to detect the first signal and the second signal based on the configuration information of the first signal and the second signal in time domain, thereby avoiding power consumption caused by premature detection or blind detection.

Based on this embodiment, the first node may receive the first information sent from the second node according to the configuration information of the pre-configured first information, thereby ensuring that the first node can accurately receive the first information sent from the second node.

In some embodiments, the first signal may be used to carry a first sequence, and the second signal may be used to carry a second sequence. The relationship between the first sequence and the second sequence may satisfy at least one of F1 to F3.

F1, a length of the first sequence being greater than or equal to a length of the second sequence.

F2, the length of the first sequence being M times of the length of the second sequence, where M is a positive integer.

F3, the first sequence including K second sequences, where K is a positive integer.

In some embodiments, the K second sequences refer to K times of repetition of the second sequence. For example, K=3, and the second sequence is 101101, then the first sequence may be 101101101101101101.

For another example, in a case where the second sequence is a plurality of sequences or includes a plurality of sequences, the first sequence refers to K times of repetition of a sequence in the plurality of sequences, and may also include K different second sequences. For example, the second sequence includes 10 and 11, and the first sequence may include K sequences of 10, or K sequences of 11, or the first sequence may include L1 sequences of 10 and L2 sequences of 11. Herein, L1 and L2 are positive integers, and L1+L2=K. L1 and L2 may be the same, or may be different.

Based on this, since different sequences may carry different information or signalings, the second node avoids the problem of a single signal being too large by dispersedly carrying the multiple sequences, thereby reducing the pressure on the first node to parse the signal.

In some embodiments, in the embodiments of the present disclosure, K1 first portions can be configured in a time window. K1 is a positive integer.

The time window may satisfy at least one of the following: a size of the time window being configured by the second node (for example, the second node may configure the size of the time window for the first node through RRC information), the time window including M1 discontinuous reception (discontinuous reception, DRX) cycles, or the time window including Q1 STMC cycles. M1 and Q1 are positive integers.

In some embodiments, in a case where the time window includes M1 DRX cycles, at least one first portion is configured within a DRX cycle.

In some other embodiments, in a case where the time window includes Q1 STMC cycles, at least one first portion is configured within an STMC cycle.

Based on this embodiment, the second node may send the first signal to the first node according to the configured time window. Correspondingly, the first node may receive the first signal within the time window. In this way, it can be avoided that the first node is always in the state of detecting the first information, and thus, the power consumption of detecting the first information is reduced.

In some embodiments, the method provided in the embodiments of the present disclosure may further include: determining, by the second node/the first node, information corresponding to a first index value based on the first index value.

The first index value may be preconfigured by the second node/the first node. Alternatively, the first index value may be acquired by the second node from other devices, for example, acquired from a core network device. Alternatively, the first index value may be acquired by the first node from the second node.

The first index value may be determined according to at least one of a type of the first node, a working bandwidth of the first node, or a number of receiving antenna(s) supported by the first node.

For example, the type of the first node may include at least one of a normal NR node, a reduced capability (reduced capability, Red Cap) node, a coverage enhancement (coverage enhancement, CE) node, and a coverage recovery (coverage recovery, CR) node. Of course, a CE node and a CR node may also be classified into multiple levels, which is not limited in the present disclosure.

In some embodiments, the second node may be configured with a correspondence between the first index value and the type of the first node, a correspondence between the first index value and the working bandwidth of the first node, and a correspondence between the first index value and the number of receiving antenna(s) supported/configured by the first node. In this way, after the type of the first node, the working bandwidth of the first node, and the number of receiving antennas supported by the first node are acquired, the second node may determine the first index value according to the correspondence. Furthermore, the second node may simply and quickly determine the information corresponding to the first index value based on the first index value.

In some embodiment, the information corresponding to the first index value may include at least one information of the G1 to G8:

G1, a number of time domain units occupied by the first signal.

G2, a number of time domain units occupied by the second signal.

G3, a number of times for which the first signal is sent repeatedly in time domain.

G4, a number of times for which the second signal is sent repeatedly in time domain.

G5, the length of the first sequence.

G6, the length of the second sequence.

G7, a number of times for which the first sequence is sent repeatedly.

G8, a number of times for which the second sequence is sent repeatedly.

It should be noted that the information of G1 to G8 is merely exemplary, and the information corresponding to the first index value may also include other information, such as a number of frequency domain resource(s) occupied by the first signal and/or the second signal, a number of times for which the first signal and/or the second signal is sent repeatedly in frequency domain, etc., which is not limited in the present disclosure.

Based on this embodiment, the first node and the second node may quickly and accurately determine the information of the first signal and the second signal according to the first index value.

In some embodiments, in a case where the first signal is used for the first node to perform synchronization, the method provided in the embodiments of the present disclosure may further include: acquiring, by the first node, a timing error by detecting the first signal.

In this way, the first node may accurately determine the time to detect the second portion through the timing error, thereby avoiding the sliding detection for the second portion within a time window, improving the success rate of detecting the second portion, and further reducing the power consumption for the first node in detecting the second portion.

In some embodiments, in a case where the first signal is used for the first node to perform channel measurement, the method provided in the embodiments of the present disclosure may further include: obtaining, by the first node, a measurement result by performing measurement according to the first signal. In a case where the measurement result is less than or equal to a threshold, the first node exits a first information detecting state, or the first node exits the first information detecting state and performs channel measurement through an SSB.

The first information detecting state may also be described as an LP-WUS detecting state, a wake-up signal detecting state, a wake-up signal monitoring state, etc. The measurement result may include a parameter value of an RSRP and/or a parameter value of an RSRQ. The threshold may be pre-configured by the first node, or may be configured by the second node for the first node. A value of the threshold can be provided according to the requirement, which is not limited in the present disclosure.

In some embodiments, in a case where the parameter value of the RSRP and/or the parameter value of the RSRQ is less than or equal to a preset threshold, the first node may exit the first information detecting state. Furthermore, the first node may also perform channel measurement or downlink measurement through the SSB.

Based on this embodiment, in a case where the first signal is used for the first node to perform measurement, the first node detects the first signal, to perform channel measurement, and exits the detecting state when the channel quality is poor and performs downlink measurement through the SSB. In this way, a situation that the first node cannot perform normal data transmission when the channel quality is poor is avoided subsequently.

In some embodiments, in a case where the second control information includes identifier information of the first node, the method provided in the embodiments of the present disclosure further includes that: a main receiver of the first node exits a dormant state, and transmits or receives data.

In some embodiments, after a wake-up circuit of the first node detects the identifier information of the first node, the main receiver may be triggered to exit the dormant state and receive data sent from the second node and/or send data to the second node.

Based on this embodiment, the second control information includes identifier information of the first node, it indicates that the first node needs to transmit or receive data. In this way, the main receiver of the first node can exit the dormant state and then can transmit or receive data.

In some embodiments, in a case where a time domain resource occupied by the first portion overlaps with a time domain resource occupied by an SSB: if a frequency domain resource occupied by the first portion overlaps with a frequency domain resource occupied by the SSB, the first portion is abandoned from being sent, and thus, a problem of misdetection in the first node caused by sending the SSB and the first portion simultaneously on the overlapped frequency domain resource is avoided; and if the frequency domain resource occupied by the first portion do not overlap with the frequency domain resource occupied by the SSB, the first information includes the first portion and the second portion, and thus, frequency domain resources can be utilized to the maximum extent, thus saving frequency domain resources.

Correspondingly, if a detection cycle exceeds an RRM detection cycle, the first node detects the SSB. If the detection cycle does not exceed the RRM detection cycle, the first node may detect the SSB or detect the first portion.

In some embodiments, in a case where a time domain resource occupied by the first portion overlaps with a time domain resource occupied by the second portion, the second portion is abandoned from being sent. Accordingly, the first node does not detect the second portion on the overlapped time domain resource.

Based on this embodiment, a situation that the first node cannot accurately detect a signal caused by sending the first portion and the second portion on the same frequency domain is avoided. In addition, the first node does not detect the second portion on the overlapped time domain resource, thereby reducing the power consumption of the first node in detecting the second portion.

In some embodiments, a channel measurement cycle configured by the first node includes 4 DRX cycles. That is, within four consecutive DRX cycles, the first node needs to perform at least one channel measurement (also referred to as RRM measurement, downlink measurement). In the embodiments of the present disclosure, a DRX cycle is 2.56 seconds (s), then a channel measurement cycle corresponding to the first signal is 4*2.56=10.24s=10240ms.

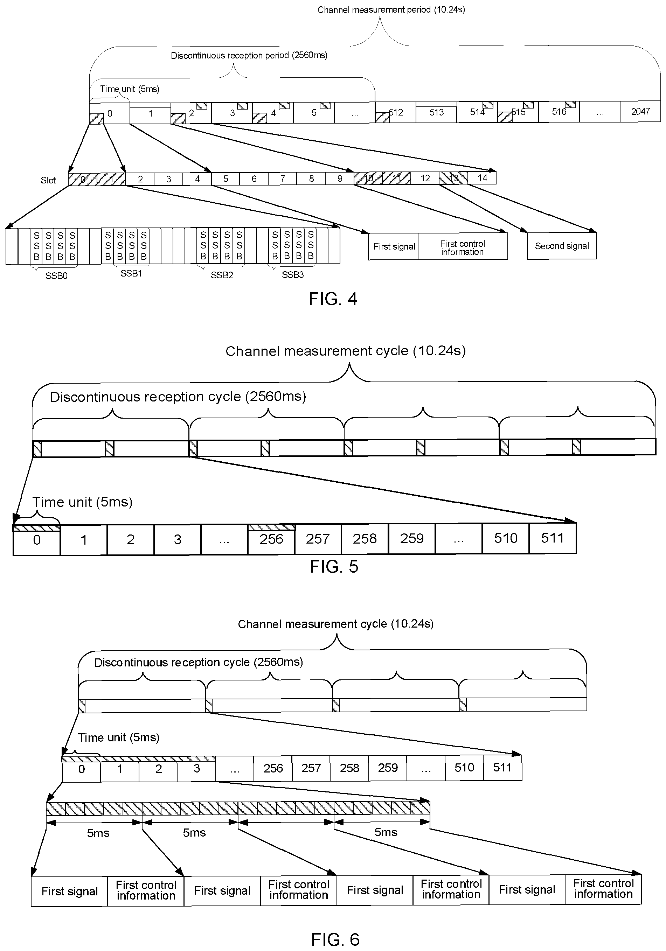

FIG. 4 is a structural schematic diagram of first information according to some embodiments. As shown in FIG. 4, the first node is configured with four SSBs, namely, SSB0, SSB1, SSB2 and SSB3. Herein, a sending cycle of an SSB is 10 milliseconds (ms) and a used subcarrier spacing is 15 kilohertz (kHz). A time length of a slot is 1ms, including 14 orthogonal frequency division multiplexing (orthogonal frequency division multiplexing, OFDM) symbols. 4 SSBs occupy 2 slots.

In some embodiments, as shown in FIG. 4, the channel measurement cycle may be divided into 10240/5=2048 time domain units with a granularity of 5 slots (i.e., 5 ms), and numberings of the 2048 time domain units are indexes 0 to 2047, respectively. Herein, a time domain unit can be recorded as SlotNum5.

In combination with FIG. 4, SSB0 occupies symbols 2 to 5 in the first slot, SSB1 occupies symbols 8 to 11 in the first slot, SSB2 occupies symbols 2 to 5 in the second slot, and SSB3 occupies symbols 8 to 11 in the second slot. At this time, the second node sends the 4 SSBs in the first two slots of the time domain units (SlotNum5) corresponding to Index0, Index2, Index4, Index6, ..., Index2046.

Taking the first signal including the first portion and the second portion, the first portion including the first signal and the first control information, and the second portion including the second signal as an example, a sending cycle of the first portion is 2560ms. As shown in FIG. 4, the first portion is sent within the time domain units with numberings corresponding to Index1, Index513, Index1025, and Index1537 of a channel measurement cycle. The second portion is sent within the time domain units corresponding to other numberings except the time domain units with numberings corresponding to Index1, Index513, Index1025, and Index1537. For example, the second signal can be sent in the fourth slot of the time domain units with numberings corresponding to Index2, Index3, Index4, Index5,..., Index514, Index515, Index516,..., of the channel measurement cycle.

In some embodiments, in a case where the first signal is used for the first node to perform synchronization, the first node may acquire a timing error after the first signal is detected, and detect the second portion based on the timing error.

In this embodiment, the first control information may include position information occupied by the first signal. The position information occupied by the first signal may include starting symbol information and/or starting slot information. For example, in combination with FIG. 4, the position information occupied by the first signal may include Index1-slot5 (i.e., the sixth slot in a channel measurement cycle with a numbering of Index1), Index513-slot5, Index1025-slot5, and Index1537-slot5.

In some other embodiments, after the first node successfully detects the second signal, a main receiver of the first node exits the dormant state and transmits or receives data.

The technical solution of FIG. 4 clarifies the structure, the occupied time domain resource and the position of the first information. In this way, the second node can send each portion of the first information on the time domain resource corresponding to the first information. The first node can accurately detect/receive each portion of the first information according to the time domain resource occupied by the first information.

In some embodiments, the first signal includes the first portion. FIG. 5 is a structural schematic diagram of another first information according to some embodiments. As shown in FIG. 5, an RRM measurement cycle includes 4 DRX cycles, that is, the first node performs at least one RRM measurement within the 4 DRX cycles. With reference to the examples in FIG. 4, an RRM measurement cycle may include 2048 time domain units (SlotNum5), which are Index 0 to Index 2047, respectively.

In some embodiments, a DRX cycle includes 2 first portions, that is, a sending cycle of the first portion is 1/2 DRX cycle. As shown in FIG. 5, time domain units occupied by the first portion are time domain units (SlotNum5) with numberings corresponding to Index0, Index256, Index512, Index768, Index1024, Index1280, Index1536, and Index1792. The first portion may be used for the first node to perform synchronization. Exemplarily, in FIG. 5, a time domain unit includes 5 slots.

The technical solution of FIG. 5 clarifies the time domain resource and position occupied by the first portion of the first information. In this way, the second node can send the first portion on the time domain resource corresponding to the first portion. The first node can accurately detect/receive the first portion according to the time domain resource occupied by the first portion.

In some embodiments, the first information includes the first portion and the second portion. The first portion includes a first signal and first control information, and the second portion includes a second signal. In time domain, the first portion occupies at least one symbol, and the second portion occupies at least one symbol. In frequency domain, the first portion occupies at least one symbol, and the second portion occupies a subcarrier.

In some embodiments, taking the first node as a terminal device as an example, the terminal device may be classified into a normal NR UE, a RedCap UE, a CE UE, or a CR UE according to a type of the terminal device.

The normal NR UE is configured such that the first portion and the second portion do not support repeated transmission(s). The RedCap UE, CE UE, and CR UE are configured such that the first portion and the second portion support repeated transmission(s).

Exemplarily, the RedCap UE, CE UE, and CR UE may independently configured a number of repeated transmission(s) supported by the first portion and the second portion. Alternatively, for the RedCap UE, CE UE, and CR UE, the first portion and the second portion may adopt a same number of repeated transmission(s). Alternatively, for some types of RedCap UE, CE UE, and CR UE, the first portion and the second portion may adopt a same number of repeated transmission(s). For example, RedCap UE and CE UE may use a same number of repeated transmission(s).

Based on this embodiment, the second node can accurately determine a same number of repeated transmission(s) of the first portion and the second portion corresponding to each type of the first node according to the type of the first node.

FIG. 6 is a structural schematic diagram of yet another first information according to some embodiments. In some embodiments, as shown in FIG. 6, a channel measurement cycle includes 4 DRX cycles. A DRX cycle includes 512 time domain units (SlotNum5). The second node may send the first portion in a first time domain unit (SlotNum5) of each DRX cycle, and repeatedly send the first portion for four times. That is, the second node may repeatedly send the first portion for four times in the time domain units (SlotNum5) with numberings corresponding to Index0 to Index3, Index 512 to Index 515, Index 1024 to Index 1027, and Index 1536 to Index 1539.

Taking the second node sending the first portion in the time domain units corresponding to Index0 to Index3 as an example, solutions for detecting the first portion by different types of first nodes may include Solution 1 to Solution 4.

Solution 1: for a normal NR UE, the first node may detect the first portion at any index in the time domain units corresponding to Index0 to Index3.

Solution 2: for a RedCap UE, if the first node enables a coverage recovery function or a coverage enhancement function, the first node may detect each time domain unit in the time domain units corresponding to Index0 to Index3, and perform combination detection. That is, the first node repeatedly detects the first portion for four times.

Solution 3: for a RedCap UE, if the first node does not enable the coverage recovery function or the coverage enhancement function, but a number of antenna(s) supported by the first node is 1, the first node can independently detect the first portion in the time domain units corresponding to Index0~Index1, and detect the first portion in Index2~Index3. The first node may treat each detection as two repeated transmissions of the first portion, and then perform combined detection.

Solution 4: for a RedCap UE, if the first node does not enable the coverage recovery function or the coverage enhancement function, but a working bandwidth of the first node is less than 20 MHz, the first node may independently detect the first portion in the time domain units corresponding to Index0~Index1, and detect the first portion in Index2~Index3. The first node may treat each detection as two repeated transmissions of the first portion, and then perform combined detection.

It should be noted that when the first node detects the first portion in the time domain units corresponding to Index 512~ Index 515, Index 1024~ Index 1027, and Index 1536~ Index 1539, the same detection solution as that for Index0~Index3 can be adopted, which is not repeated in the present disclosure.

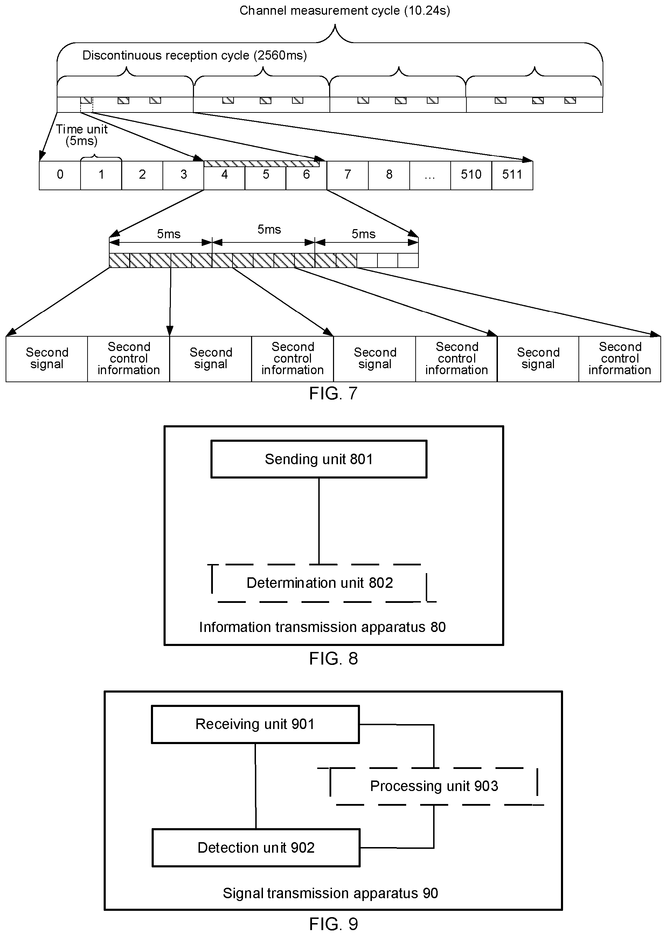

In some embodiments, FIG. 7 is a structural schematic diagram of yet another first information according to some embodiments. As shown in FIG. 7, a channel measurement cycle includes 4 DRX cycles, and a DRX cycle includes 512 time domain units (SlotNum5). The second node may send the second portion at multiple occasions in each DRX cycle (for example, as shown in FIG. 7, 3 occasions are configured in each DRX cycle for sending the second portion), and the second portion is repeatedly sent for 4 times at each occasion. In FIG. 7, taking the time domain units (SlotNum5) with numberings corresponding to Index4 to Index6 as an example, and the second portion is repeatedly sent for 4 times.

Taking the second node sending the second portion in the time domain units corresponding to Index4 to Index6 as an example, solutions for detecting the second portion by different types of first nodes may include Solution 1 to Solution 4.

Solution 1: for a normal NR UE, the first node may detect the second portion in any transmission in the time domain units corresponding to Index4~Index6.

Solution 2: for a RedCap UE, if the first node enables the coverage recovery function or the coverage enhancement function, the first node may detect the second portion sent repeatedly for 4 times in Index4 to Index6.

Solution 3: for a RedCap UE, if the first node does not enable the coverage recovery function or the coverage enhancement function, but the number of antenna(s) supported by the first node is 1, the first node may independently detect the second portion sent repeatedly in first two times in the time domain units corresponding to Index4 to Index6, and detect the second portion sent repeatedly in last two times in the time domain units corresponding to Index4 to Index6.

Solution 4: for a RedCap UE, if the first node does not enable the coverage recovery function or the coverage enhancement function, but a working bandwidth of the first node is less than 20 MHz, the first node may independently detect the second portion sent repeatedly in first two times in the time domain units corresponding to Index4 to Index6, and detect the second portion sent repeatedly in last two times in the time domain units corresponding to Index4 to Index6.

It should be noted that the method that the first node detects the second portion at other occasions may refer to the above description, which will not be repeated in the present disclosure.

Based on this embodiment, for different types of the first nodes, or the same type of the first nodes with different working bandwidths or supported number of antenna(s), the first node may determine when to detect the first portion and a number of detection(s), thereby avoiding that the first node is in a state of detecting the first portion all the time, and further, reducing the power consumption of the first node.

The various solutions in the embodiments of the present disclosure can be combined without conflict.

The embodiments of the present disclosure may divide the signal detection apparatus into functional modules or functional units according to the above method embodiments. For example, division of each functional modules or each functional units may be performed corresponding to each function, or two or more functions may be integrated into a processing module. The above integrated module may be implemented in the form of hardware, or may be implemented in the form of a software function module or a functional unit. Herein, the division for modules or units in the embodiments of the present disclosure is illustrative, which is only a logical function division, and there may be another division manner in actual implementation.

FIG. 8 is a structural schematic diagram of an information transmission apparatus according to some embodiments. In a case of dividing the respective functional modules by corresponding functions, as shown in FIG. 8, the signal transmission apparatus 80 may be configured to perform functions involved in the second node in the above embodiments. The signal transmission apparatus 80 shown in FIG. 8 may include: a sending unit 801.

The sending unit 801 is configured to send first information. Herein, the first information includes a first portion and/or a second portion. The first portion includes a first signal and/or first control information, and the second portion includes a second signal and/or second control information.

In some embodiments, the first signal is used for at least one of: a first node to perform synchronization, or channel measurement; or indicating system information change.

In some embodiments, in a case where the first signal is used for the first node to perform channel measurement, a position of a time domain resource occupied by the first signal is related to a position of a time domain resource occupied by an SSB.

In some embodiments, the position of the time domain resource occupied by the first signal being related to the position of the time domain resource occupied by the SSB includes: the position of the time domain resource occupied by the first signal being the same as the position of the time domain resource occupied by the SSB; or there being an offset value between the position of the time domain resource occupied by the first signal and the position of the time domain resource occupied by the SSB; or a starting position of the time domain resource occupied by the first signal being the same as a starting position of the time domain resource occupied by the SSB.

In some embodiments, the first control information is used to indicate at least one of: starting position information of the first signal; time domain position information where the first signal is located; falling back to a paging process; system information change; RRM measurement; whether the second portion includes the second control information; configuration information of the second control information; configuration change information of the first information; a starting resource of the first control information; a termination resource of the first control information; a starting information identifier of the first control information; an ending information identifier of the first control information.

In some embodiments, the configuration change information of the first information includes at least one of: configuration change information of the first signal; configuration change information of the second signal; indication information whether to send the first signal and/or the second signal within a time window; or indication information whether to send the first signal and/or the second signal in one or more slots of a time window.

In some embodiments, the second signal is used to indicate the first node to exit a dormant state and/or indicate RRM measurement.

In some embodiments, the second control information includes at least one of the following: falling back to a paging process; system information change; RRM measurement; identifier information of a first node; configuration change information of the first information; indication information of a starting resource for carrying the second control information; indication information of an ending resource for carrying the second control information; a starting information identifier of the second control information; an ending information identifier of the second control information.

In some embodiments, the configuration change information of the first information includes at least one of: configuration change information of the first signal; configuration change information of the second signal; indication information whether to send the first signal and/or the second signal within a time window; or indication information whether to send the first signal and/or the second signal in one or more slots of a time window.

In some embodiments, the first signal and the second signal satisfy at least one of the following relationships in frequency domain: a subcarrier spacing configured for the first signal being the same as a subcarrier spacing configured for the second signal; a bandwidth of a frequency domain resource occupied by the first signal being the same as a bandwidth of a frequency domain resource occupied by the second signal; or a position of the frequency domain resource occupied by the first signal being the same as a position of the frequency domain resource occupied by the second signal.

In some embodiments, at least one of the following parameters is configured independently for the first signal and the second signal: a subcarrier spacing; a bandwidth of an occupied frequency domain resource; a position of the occupied frequency domain resource; a size of an occupied time domain resource; a position of the occupied time domain resource.

In some embodiments, a number of time domain units occupied by the first signal is greater than or equal to a number of time domain units occupied by the second signal, or the number of time domain units occupied by the first signal is N times of the number of time domain units occupied by the second signal, and N is a positive integer.

In some embodiments, the first signal is used to carry a first sequence, and the second signal is used to carry a second sequence.

In some embodiments, a length of the first sequence is greater than or equal to a length of the second sequence; or the length of the first sequence is M times of the length of the second sequence, M is a positive integer; or the first sequence includes K second sequences, where K is a positive integer.

In some embodiments, as shown in FIG. 8, the signal transmission apparatus 80 further includes a determination unit 802. The determination unit 802 is configured to determine at least one of the following information according to a first index value: a number of time domain units occupied by the first signal; a number of time domain units occupied by the second signal; a number of times for which the first signal is sent repeatedly in time domain; a number of times for which the second signal is sent repeatedly in the time domain; the length of the first sequence; the length of the second sequence; a number of times for which the first sequence is sent repeatedly; a number of times for which the second sequence is sent repeatedly.

In some embodiments, the first index value is determined according to at least one of a type of a first node, a working bandwidth of the first node, or a number of receiving antenna(s) supported by the first node.

In some embodiments, K1 first portions are configured in a time window, K1 is a positive integer, and the time window satisfies at least one of: a size of the time window being configured by the second node; the time window including M1 DRX cycles, M1 is a positive integer; the time window includes Q1 STMC cycles, Q1 is a positive integer.

In some embodiments, in a case where the time window includes M1 DRX cycles, at least one first portion is configured within a DRX cycle; or in a case where the time window includes Q1 STMC cycles, at least one first portion is configured within a STMC cycle.

In some embodiments, in a case where a time domain resource occupied by the first portion overlaps with a time domain resource occupied by an SSB, and in a case where a frequency domain resource occupied by the first portion overlaps with a frequency domain resource occupied by the SSB, the first portion is abandoned from being sent.

In some embodiments, in a case where a time domain resource occupied by the first portion overlaps with a time domain resource occupied by the second portion, the second portion is abandoned from being sent.

In some other embodiments, the determination unit 802 in FIG. 8 may be replaced by a processor, and the processor may integrate the functions of the determination unit 802.

Further, when the determination unit 802 is replaced by a processor, the information transmission apparatus 80 involved in the embodiments of the present disclosure may be the information transmission apparatus shown in FIG. 2.

FIG. 9 is a structural schematic diagram of an information transmission apparatus according to some embodiments. When the division of each functional module is performed corresponding to each function, as shown in FIG. 9, the present disclosure provides the signal transmission apparatus 90, and the signal transmission apparatus 90 can be configured to perform the functions involved in the first node in the above embodiments. In some embodiments, the signal transmission apparatus 90 may include: a receiving unit 901.

The receiving unit 901 is configured to receive first information sent from a second node. Herein, the first information includes a first portion and/or a second portion. The first portion includes a first signal and/or first control information, and the second portion includes a second signal and/or second control information.

In some embodiments, the first signal is used for at least one of: a first node to perform synchronization, or channel measurement; or acting as a discovery signal; or indicating system information change.

In some embodiments, in a case where the first signal is used for the first node to perform channel measurement, a position of a time domain resource occupied by the first signal is related to a position of a time domain resource occupied by an SSB.

In some embodiments, the position of the time domain resource occupied by the first signal being related to the position of the time domain resource occupied by the SSB includes: the position of the time domain resource occupied by the first signal being the same as the position of the time domain resource occupied by the SSB; or there being an offset value between the position of the time domain resource occupied by the first signal and the position of the time domain resource occupied by the SSB; or a starting position of the time domain resource occupied by the first signal being the same as a starting position of the time domain resource occupied by the SSB.

In some embodiments, in a case where the first signal is used for the first node to perform channel measurement, as shown in FIG. 9, the signal transmission apparatus 90 may further include a detection unit 902. The detection unit 902 is configured to obtain a measurement result by performing channel measurement according to the first signal. The detection unit 902 is further configured to, in a case where the measurement result is less than or equal to a threshold, exit a first information detecting state, or exit the first information detecting state and perform channel measurement by detecting an SSB.

In some embodiments, the first control information is used to indicate at least one of: starting position information of the first signal; time domain position information where the first signal is located; falling back to a paging process; system information change; RRM measurement; whether the second portion includes the second control information; configuration information of the second control information; configuration change information of the first information; a starting resource of the first control information; a termination resource of the first control information; a starting information identifier of the first control information; an ending information identifier of the first control information.

In some embodiments, the configuration change information of the first information includes at least one of: configuration change information of the first signal; configuration change information of the second signal; indication information whether to send the first signal and/or the second signal within a time window; or indication information whether to send the first signal and/or the second signal in one or more slots of a time window.

In some embodiments, the second signal is used to indicate the first node to exit a dormant state and/or indicate an RRM measurement.

In some embodiments, the second control information includes at least one of the following: falling back to a paging process; system information change; RRM measurement; identifier information of a first node; configuration change information of the first information; indication information of a starting resource for carrying the second control information; indication information of an ending resource for carrying the second control information; a starting information identifier of the second control information; an ending information identifier of the second control information.

In some embodiments, the configuration change information of the first information includes at least one of: configuration change information of the first signal; configuration change information of the second signal; indication information whether to send the first signal and/or the second signal within a time window; or indication information whether to send the first signal and/or the second signal in one or more slots of a time window.

In some embodiments, in a case where the second control information includes the identifier information of the first node, as shown in FIG. 9, the signal transmission apparatus 90 may further include a processing unit 903, configured to control a main receiver of the first node to exit a dormant state and transmit and/or receive data.

In some embodiments, the first signal and the second signal satisfy at least one of the following relationships in frequency domain: a subcarrier spacing configured for the first signal being the same as a subcarrier spacing configured for the second signal; a bandwidth of a frequency domain resource occupied by the first signal being the same as a bandwidth of a frequency domain resource occupied by the second signal; a position of the frequency domain resource occupied by the first signal being the same as a position of the frequency domain resource occupied by the second signal.

In some embodiments, at least one of the following parameters is configured independently for the first signal and the second signal: a subcarrier spacing; a bandwidth of an occupied frequency domain resource; a position of the occupied frequency domain resource; a size of an occupied time domain resource; a position of the occupied time domain resource.

In some embodiments, a number of time domain units occupied by the first signal is greater than or equal to a number of time domain units occupied by the second signal, or the number of time domain units occupied by the first signal is N times of the number of time domain units occupied by the second signal, and N is a positive integer.

In some embodiments, the first signal is used to carry a first sequence, and the second signal is used to carry a second sequence.

In some embodiments, a length of the first sequence is greater than or equal to a length of the second sequence; or the length of the first sequence is M times of the length of the second sequence, M is a positive integer; or the first sequence includes K second sequences, and K is a positive integer.

In some embodiments, as shown in FIG. 9, the signal transmission apparatus 90 further includes a detection unit 902. The detection unit 902 is configured to determine at least one of the following information according to a first index value: a number of time domain units occupied by the first signal; a number of time domain units occupied by the second signal; a number of times for which the first signal is sent repeatedly in time domain; a number of times for which the second signal is sent repeatedly in the time domain; the length of the first sequence; the length of the second sequence; a number of times for which the first sequence is sent repeatedly; a number of times for which the second sequence is sent repeatedly.

In some embodiments, the first index value is determined according to at least one of a type of a first node, a working bandwidth of the first node, or a number of receiving antenna(s) supported by the first node.

In some embodiments, K1 first portions are configured in a time window, K1 is a positive integer, and the time window satisfies at least one of: a size of the time window being configured by the second node; the time window including M1 DRX cycles, M1 is a positive integer; the time window includes Q1 STMC cycles, Q1 is a positive integer.

In some embodiments, in a case where the time window includes M1 DRX cycles, at least one first portion is configured within a DRX cycle; or in a case where the time window includes Q1 STMC cycles, at least one first portion is configured within a STMC cycle.

In some embodiments, in a case where a time domain resource occupied by the first portion overlaps with a time domain resource occupied by the SSB, and in a case where a frequency domain resource occupied by the first portion overlaps with a frequency domain resource occupied by SSB, the detection unit 902 is further configured to: in a case where an RRM detection cycle is reached, detect an SSB; in a case the RRM detection cycle is not reached, detect the SSB or detect the first portion.

In some embodiments, in a case where a time domain resource occupied by the first portion overlaps with a time domain resource occupied by the second portion, the detection unit 902 is further configured to: not detect the second portion on the overlapped time domain resource.

In some other embodiments, the processing unit 903 in FIG. 9 may be replaced by a processor, and the processor may integrate the functions of the processing unit 903.

Further, when the processing unit 903 is replaced by a processor, the information transmission apparatus 90 involved in the embodiments of the present disclosure may be the information transmission apparatus shown in FIG. 2.

A computer-readable storage medium is further provided in the embodiments of the present disclosure. All or part of the processes in the above method embodiments can be implemented by a computer program instructing relevant hardware. The program can be stored in the above-mentioned computer-readable storage medium, and when the program is executed, the program may include the processes as described in the above method embodiments. The computer-readable storage medium may be an internal storage unit of a signal detection apparatus (including a data sending end and/or a data receiving end) in any of the aforementioned embodiments, such as a hard disk or a memory of the signal detection apparatus. The computer-readable storage medium may also be an external storage device of the above-mentioned terminal device, such as a plug-in hard disk, a smart media card (smart media card, SMC), a secure digital (secure digital, SD) card, a flash card, etc., equipped on the above terminal device. Furthermore, the above computer-readable storage medium may include both an internal storage unit and an external storage device of the signal detection apparatus. The above computer-readable storage medium is used to store the above-mentioned computer program and other programs and data required by the signal detection apparatus. The computer-readable storage medium may also be used to temporarily store data that has been output or is to be output.

Through the description of the above implementations, those of ordinary skill in the art can clearly understand that for the convenience and simplicity of the description, the division of the above functional modules is given merely as an example. In practical applications, the above functions can be allocated to different functional modules according to requirements, that is, the internal structure of the apparatus can be divided into different functional modules to complete all or part of the functions described above.

In the several embodiments provided in the present disclosure, it should be understood that the disclosed apparatuses and methods can be implemented in other ways. For example, the apparatus embodiments described above are only illustrative. For example, the division of modules or units is only a logical functional division. In actual implementation, there may be other division methods, for example, multiple units or components can be combined or integrated into another apparatus, or some features can be ignored or not performed. As another example, the coupling or direct coupling or communicative connection between each other as shown or discussed above may be an indirect coupling or a communicative connection via some interfaces, apparatus or units, which may be electrical, mechanical, or in other forms.

The units described as separate components may or may not be physically separated, and the component(s) shown as units may be one physical unit or multiple physical units, that is, may be located in one place, or may be distributed to multiple different places. A part or all of the units may be selected according to actual needs, to implement the purpose of the solutions of the embodiments.

In addition, the functional units in the embodiments of the present disclosure may be integrated into a single processing unit or the functional units may exist physically and separately, or two or more units may be integrated into a unit. The above integrated unit may be implemented in the form of hardware, or may be implemented in the form of a software functional unit.

If the integrated unit is implemented in the form of the software functional unit and sold or used as an independent product, the integrated unit may be stored in a readable storage medium. Based on this understanding, the technical solutions of the present disclosure may be essentially, or a part of the technical solutions of the present disclosure that contributes to the related technology may be, all or part of the technical solutions may be, embodied in the form of a software product, and the software product is stored in a storage medium, which includes several instructions to enable a device (which may be a single-chip microcomputer, a chip, etc.) or a processor to perform all or part of steps of methods in various embodiments of the present disclosure. The aforementioned storage media include: a U disk, a mobile hard disk, a ROM, a RAM, a magnetic disk or an optical disk and other media that may store program codes.

The above descriptions are merely specific implementation of the present disclosure, but the scope of protection of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. An information transmission method, comprising:
sending, by a second node, first information;
wherein the first information includes a first portion and/or a second portion, the first portion includes a first signal and/or first control information, and the second portion includes a second signal and/or second control information.

2. The method according to claim 1, wherein the first signal is used for one or more of: a first node to perform synchronization, or channel measurement; acting as a discovery signal; or indicating system information change.

3. The method according to claim 2, wherein in a case where the first signal is used for the first node to perform channel measurement, a position of a time domain resource occupied by the first signal is related to a position of a time domain resource occupied by a synchronization signal block (SSB).

4. The method according to claim 3, wherein the position of the time domain resource occupied by the first signal being related to the position of the time domain resource occupied by the synchronization signal block (SSB) comprises:
the position of the time domain resource occupied by the first signal being the same as the position of the time domain resource occupied by the SSB; or
there being an offset value between the position of the time domain resource occupied by the first signal and the position of the time domain resource occupied by the SSB; or
a starting position of the time domain resource occupied by the first signal being the same as a starting position of the time domain resource occupied by the SSB.

5. The method according to any one of claims 1 to 4, wherein the first control information is used to indicate one or more of:
starting position information of the first signal;
time domain position information where the first signal is located;
falling back to a paging process;
system information change;
radio resource management (RRM) measurement;
whether the second portion includes the second control information;
configuration information of the second control information;
configuration change information of the first information;
a starting resource carrying the first control information;
a termination resource carrying the first control information;
a starting information identifier of the first control information; or
an ending information identifier of the first control information.

6. The method according to claim 5, wherein the configuration change information of the first information includes one or more of:
configuration change information of the first signal;
configuration change information of the second signal;
indication information whether to send the first signal and/or the second signal within a time window;
indication information whether to send the first signal and/or the second signal in one or more slots of a time window.

7. The method according to claim 1, wherein the second signal is used to indicate a first node to exit a dormant state and/or indicate RRM measurement.

8. The method according to claim 1 or 7, wherein the second control information includes one or more of:
falling back to a paging process;
system information change;
RRM measurement;
identifier information of a first node;
configuration change information of the first information;
indication information of a starting resource for carrying the second control information;
indication information of an ending resource for carrying the second control information;
a starting information identifier of the second control information; or
an ending information identifier of the second control information.

9. The method according to claim 8, wherein the configuration change information of the first information includes one or more of:
configuration change information of the first signal;
configuration change information of the second signal;
indication information whether to send the first signal and/or the second signal within a time window; or
indication information whether to send the first signal and/or the second signal in one or more slots of a time window.

10. The method according to claim 1, wherein the first signal and the second signal satisfy one or more of following relationships in frequency domain:
a subcarrier spacing configured for the first signal being the same as a subcarrier spacing configured for the second signal;
a bandwidth of a frequency domain resource occupied by the first signal being the same as a bandwidth of a frequency domain resource occupied by the second signal; or
a position of the frequency domain resource occupied by the first signal being the same as a position of the frequency domain resource occupied by the second signal.

11. The method according to claim 1, wherein one or more of following parameters are configured independently for the first signal and the second signal:
a subcarrier spacing;
a bandwidth of an occupied frequency domain resource;
a position of the occupied frequency domain resource;
a size of an occupied time domain resource; or
a position of the occupied time domain resource.

12. The method according to claim 1, wherein a number of time domain units occupied by the first signal is greater than or equal to a number of time domain units occupied by the second signal, or the number of time domain units occupied by the first signal is N times of the number of time domain units occupied by the second signal, wherein N is a positive integer.

13. The method according to claim 1, wherein the first signal is used to carry a first sequence, and the second signal is used to carry a second sequence.

14. The method according to claim 13, wherein
a length of the first sequence is greater than or equal to a length of the second sequence; or
the length of the first sequence is M times of the length of the second sequence, wherein M is a positive integer; or
the first sequence includes K second sequences, wherein K is a positive integer.

15. The method according to claim 14, wherein the method further comprises:
determining, by the second node, one or more of following information according to a first index value:
a number of time domain units occupied by the first signal;
a number of time domain units occupied by the second signal;
a number of times for which the first signal is sent repeatedly in time domain;
a number of times for which the second signal is sent repeatedly in the time domain;
the length of the first sequence;
the length of the second sequence;
a number of times for which the first sequence is sent repeatedly; or
a number of times for which the second sequence is sent repeatedly.

16. The method according to claim 15, wherein the first index value is determined according to one or more of a type of a first node, a working bandwidth of the first node, or a number of receiving antennas supported by the first node.

17. The method according to claim 1, wherein K1 first portions are configured in a time window, K1 is a positive integer; and the time window satisfies one or more of:
a size of the time window being configured by the second node;
the time window including M1 discontinuous reception (DRX) cycles, wherein M1 is a positive integer;
the time window includes Q1 synchronization signal/physical boardcast channel block measurement time configuration (STMC) cycles, wherein Q1 is a positive integer.

18. The method according to claim 17, wherein in a case where the time window includes M1 DRX cycles, one or more first portions are configured within a DRX cycle; or
in a case where the time window includes Q1 STMC cycles, one or more first portions are configured within an STMC cycle.

19. The method according to claim 1, wherein in a case where a time domain resource occupied by the first portion overlaps with a time domain resource occupied by a synchronization signal block (SSB), and in a case where a frequency domain resource occupied by the first portion overlaps with a frequency domain resource occupied by the SSB, the first portion is abandoned from being sent.

20. The method according to claim 1, wherein in a case where a time domain resource occupied by the first portion overlaps with a time domain resource occupied by the second portion, the second portion is abandoned from being sent.

21. A signal transmission method, comprising:
receiving, by a first node, first information sent from a second node;
wherein the first information includes a first portion and/or a second portion, the first portion includes a first signal and/or first control information, and the second portion includes a second signal and/or second control information.

22. The method according to claim 21, wherein the first signal is used for one or more of: the first node to perform synchronization, or channel measurement; acting as a discovery signal; or indicating system information change.

23. The method according to claim 22, wherein in a case where the first signal is used for the first node to perform channel measurement, a position of a time domain resource occupied by the first signal is related to a position of a time domain resource occupied by an SSB.

24. The method according to claim 23, wherein the position of the time domain resource occupied by the first signal being related to the position of the time domain resource occupied by the SSB comprises:
the position of the time domain resource occupied by the first signal being the same as the position of the time domain resource occupied by the SSB; or
there being an offset value between the position of the time domain resource occupied by the first signal and the position of the time domain resource occupied by the SSB; or
a starting position of the time domain resource occupied by the first signal being the same as a starting position of the time domain resource occupied by the SSB.

25. The method according to claim 22, wherein in a case where the first signal is used for the first node to perform channel measurement, the method further comprises:
performing, by the first node, channel measurement according to the first signal, to obtain a measurement result;
in a case where the measurement result is less than or equal to a threshold, exiting, by the first node, a first information detecting state, or exiting, by the first node, the first information detecting state and performing, by the first node, channel measurement by detecting an SSB.

26. The method according to any one of claims 21 to 25, wherein the first control information is used to indicate one or more of:
starting position information of the first signal;
time domain position information of the first signal;
falling back to a paging process;
system information change;
RRM measurement;
whether the second portion includes the second control information;
configuration information of the second control information;
configuration change information of the first information;
a starting resource carrying the first control information;
a termination resource carrying the first control information;
a starting information identifier of the first control information;
an ending information identifier of the first control information.

27. The method according to claim 26, wherein the configuration change information of the first information includes one or more of:
configuration change information of the first signal;
configuration change information of the second signal;
indication information whether to send the first signal and/or the second signal within a time window;
indication information whether to send the first signal and/or the second signal in one or more slots of a time window.

28. The method according to claim 21, wherein the second signal is used to indicate the first node to exit a dormant state and/or indicate RRM measurement.

29. The method according to claim 21 or 28, wherein the second control information includes one or more of:
falling back to a paging process;
system information change;
RRM measurement;
identifier information of the first node;
configuration change information of the first information;
indication information of a starting resource for carrying the second control information;
indication information of an ending resource for carrying the second control information;
a starting information identifier of the second control information; or
an ending information identifier carrying the second control information.

30. The method according to claim 29, wherein the configuration change information of the first information includes one or more of:
configuration change information of the first signal;
configuration change information of the second signal;
indication information whether to send the first signal and/or the second signal within a time window;
indication information whether to send the first signal and/or the second signal in one or more slots of a time window.

31. The method according to claim 21, wherein the first signal and the second signal satisfy one or more of following relationships in frequency domain:
a subcarrier spacing configured for the first signal being the same as a subcarrier spacing configured for the second signal;
a bandwidth of a frequency domain resource occupied by the first signal being the same as a bandwidth of a frequency domain resource occupied by the second signal;
a position of the frequency domain resource occupied by the first signal being the same as a position of the frequency domain resource occupied by the second signal.

32. The method according to claim 21, wherein one or more of following parameters are configured independently for the first signal and the second signal:
a subcarrier spacing;
a bandwidth of an occupied frequency domain resource;
a position of the occupied frequency domain resource;
a size of an occupied time domain resource;
a position of the occupied time domain resource.

33. The method according to claim 21, wherein a number of time domain units occupied by the first signal is greater than or equal to a number of time domain units occupied by the second signal, or the number of time domain units occupied by the first signal is N times of the number of time domain units occupied by the second signal, wherein N is a positive integer.

34. The method according to claim 21, wherein the first signal is used to carry a first sequence, and the second signal is used to carry a second sequence.

35. The method according to claim 34, wherein
a length of the first sequence is greater than or equal to a length of the second sequence; or
the length of the first sequence is M times of the length of the second sequence, wherein M is a positive integer; or
the first sequence includes K second sequences, wherein K is a positive integer.

36. A second node, comprising: a processor, wherein the processor is configured to send first information, the first information includes a first portion and/or a second portion, the first portion includes a first signal and/or first control information, and the second portion includes a second signal and/or second control information.

37. A first node, comprising: a processor, wherein the processor is configured to receive first information sent from a second node;
wherein the first information includes a first portion and/or a second portion, the first portion includes a first signal and/or first control information, and the second portion includes a second signal and/or second control information.

38. A computer-readable storage medium, wherein the computer-readable storage medium comprises computer instructions;
wherein when the computer instructions are executed, the information transmission method according to any one of claims 1 to 20 or 21 to 35 is implemented.
